# EUROPÄISCHE PATENTANMELDUNG

(11) **EP 1 433 669 A2**
(43) Veröffentlichungstag der Anmeldung: **30.06.2004**
(21) Anmeldenummer: 04004685.6
(22) Anmeldetag: 29.01.2001
(51) Int. Cl.: B60R 21/20

(54) **Gassackmodulabdeckkappe mit Heizmittel**

(30) Priorität: 24.02.2000 DE 20003365 U
(62) Teilanmeldung aus: 01101669.8
(71) Anmelder: TRW Automotive Safety Systems GmbH, 63743 Aschaffenburg (DE)
(72) Erfinder: Bieber, Udo, 63843 Niedernberg (DE); Hehl, Achim, 63768 Hösbach (DE)
(74) Vertreter: Kitzhofer, Thomas, Dipl.-Ing.

(57) **Zusammenfassung**

Eine Gassackmodulabdeckkappe einer Fahrzeuginsassen-Rückhaltevorrichtung mit wenigstens einer Kunststoffschicht ist wenigstens stellenweise mit einem Heizmittel (18) versehen, mit dem vor einer Aktivierung des Gassackmoduls die Temperatur der Abdeckkappe gegenüber der Umgebungstemperatur erhöht werden kann. Es ist ein Lederüberzug (52) vorgesehen, und das Heizmittel (18) ist zwischen einer Kunststoffschicht (12) der Gassackmodulabdeckkappe (10) und dem Lederüberzug (52) angeordnet.

## Beschreibung

Die Erfindung betrifft eine Gassackmodulabdeckkappe gemäß dem Oberbegriff des Anspruchs 1.

Derartige Abdeckkappen sollen den darunterliegenden Gassack vor seinem Einsatz vor Beschädigungen schützen, sich gleichzeitig aber der Optik des Fahrzeuginnenraumes optimal anpassen. Daher ist die Abdeckkappe oft in Material und Struktur zum Beispiel der Gestaltung des Armaturenbrettes angeglichen. Beim Auslösen eines Gassackes eines Fahrzeuginsassen-Rückhaltesystems muß die Abdeckkappe, die zum Beispiel im Lenkrad oder im Armaturenbrett integriert ist, geöffnet werden, um den Gassack freizugeben. Oft sind zu diesem Zweck Sollbruchstellen in den Abdeckkappen vorgefertigt, an denen die Abdeckkappe sich öffnen kann.

Bei aus Kunststoff bestehenden Abdeckkappen liegt ein Problem darin, daß die zum Öffnen der Abdeckkappe notwendigen Kräfte mit der Temperatur schwanken, da die Materialeigenschaften der verwendeten Kunststoffe stark temperaturabhängig sind. So nimmt z.B. die Sprödigkeit des Kunststoffes mit fallender Temperatur stark zu, wogegen die Festigkeit des Kunststoffs mit steigender Temperatur abnimmt. Dies führt dazu, daß eine Abdeckkappe, die auf ein optimales Öffnen bei sommerlichen Temperaturen ausgelegt ist, sich bei tiefen Temperaturen im Winter nicht zuverlässig öffnen läßt. Außerdem können bei tiefen Temperaturen schon geringe äußere Kräfte zu einer Beschädigung der Abdeckkappe führen.

In der US-A-5 372 379 ist zur Lösung dieses Problems vorgeschlagen, einen oder mehrere elektrisch erwärmbare Heizstreifen auf die Rückseite der Abdeckkappe in der Nähe der Sollbruchstelle aufzukleben, um den Kunststoff der Abdeckkappe auf eine vorbestimmte Temperatur aufzuheizen.

Die Erfindung schafft eine Gassackmodulabdeckkappe für ein Fahrzeuginsassen-Rückhaltesystem, die ihre Funktion über einen weiten Temperaturbereich zuverlässig erfüllt. Dies wird durch die Merkmale des Anspruchs 1 erreicht. Da bei tieferen Temperaturen die Temperatur der Abdeckkappe gegenüber der Umgebungstemperatur erhöht werden kann, werden die Materialeigenschaften des Kunststoffes der Abdeckkappe über einen weiten Bereich der Umgebungstemperatur konstant gehalten, und die zum Öffnen der Abdeckkappe notwendige Kraft bleibt in etwa konstant. Da die Abdeckkappe somit stets auf einer bestimmten Temperatur gehalten wird, erhöht sich auch bei tiefen Umgebungstemperaturen die mit sinkender Temperatur zunehmende Kerbempfindlichkeit nicht. Wenn das Heizmittel zwischen einer Kunststoffschicht der Abdeckung und dem Lederüberzug angeordnet ist, läßt sich eine belederte Abdeckkappe auf einfache Weise beheizen.

In einer vorteilhaften Weiterentwicklung der Erfindung weist die Abdeckkappe eine Schwächungszone auf, und das Heizmittel ist im Bereich der Schwächungszone angeordnet. Eine Schwächungszone, zum Beispiel eine Reißlinie oder eine Zone verringerter Dicke in der Abdeckkappe, wird an der Stelle angeordnet, an der sich die Abdeckkappe öffnen soll, um den Gassack freizugeben. Dies ist der eigentlich kritische Bereich der Abdeckkappe, da sichergestellt sein muß, daß sich an dieser Stelle bei Aufbringen einer bestimmten Kraft die Abdeckkappe öffnet. Es ist damit also ausreichend, das Heizmittel nur im Bereich dieser Schwächungszone, z.B. direkt an der Schwächungszone oder in unmittelbar daneben liegenden Abschnitten der Abdeckkappe, anzuordnen. Auf diese Weise wird die Herstellung weniger aufwendig und weniger materialintensiv.

Vorteilhafterweise ist das Heizmittel ein Heizdraht. Da die Schwächungszone meistens keine große Breite aufweist, ist die Verwendung eines kostengünstigen Heizdrahtes zur Beheizung dieses Gebietes ausreichend.

Bevorzugt besteht das Heizmittel aus einem elektrisch leitfähigen Kunststoff. Ein elektrisch leitfähiger Kunststoff läßt sich in der gewünschten Anordnung und Schichtdicke während des Herstellungsprozesses der aus Kunststoff bestehenden Abdeckkappe leicht einfügen. Es besteht auch nicht die Gefahr, daß sich die Schicht durch das Material durchdrückt und die Optik beeinträchtigt.

Die elektrischen Verbindungselemente zum Anschluß des Heizmittels an eine Stromquelle sind bevorzugt in einer Kunststoffschicht der Abdeckung eingegossen, um die Fertigungskosten gering zu halten.

In einer anderen vorteilhaften Ausführungsform der Erfindung ist das Heizmittel eine Heizmatte. Dies ist aufgrund der flächigen Erstreckung einer Heizmatte besonders vorteilhaft, wenn die gesamte Abdeckkappe beheizt werden soll.

Zur einfachen und innigen Befestigung der Heizmatte an der Abdeckung ist die Heizmatte mit einer Kunststoffschicht der Abdeckung vorzugsweise ultraschallverschweißt.

Weitere Vorteile und Merkmale der Erfindung gehen aus der nachfolgenden Beschreibung einzelner Ausführungsbeispiele und den beigefügten Zeichnungen hervor. In den Zeichnungen zeigen:
- Figur 1 eine schematische Schnittansicht einer Abdeckkappe gemäß eines ersten Beispiels;
- Figur 2 eine schematische Schnittansicht einer Abdeckkappe gemäß eines zweiten Beispiels;
- Figur 3 eine schematische Schnittansicht einer Abdeckkappe gemäß eines weiteren Beispiels;
- Figur 4 eine schematische dreidimensionale Ansicht einer Abdeckkappe;
- Figuren 5a und 5b eine schematische Ansicht der Innenseite einer eine leitfähige Kunststoffschicht aufweisenden Abdeckkappe, wobei Fig. 5b eine geringfügige Modifikation gegenüber der Ausführungsform nach Fig. 5a zeigt;
- Figuren 6a und 6b verschiedene, bei Abdeckkappen einsetzbare Heizmittel;
- Figur 7 eine schematische Ansicht der Innenseite einer eine Heizmatte aufweisenden Abdeckkappe;
- Figur 8 eine Ansicht einer bei einer Abdeckkappe einsetzbaren Heizmatte; und
- Figur 9 eine schematische Explosionsansicht einer erfindungsgemäßen Abdeckkappe mit einem Lederüberzug.

Einige der Figuren beziehen sich nicht auf erfindungsgemäße Ausführungsformen. Die in Bezug auf diese Figuren gegebenen Erläuterungen tragen jedoch dazu bei, die Erfindung verständlich zu machen.

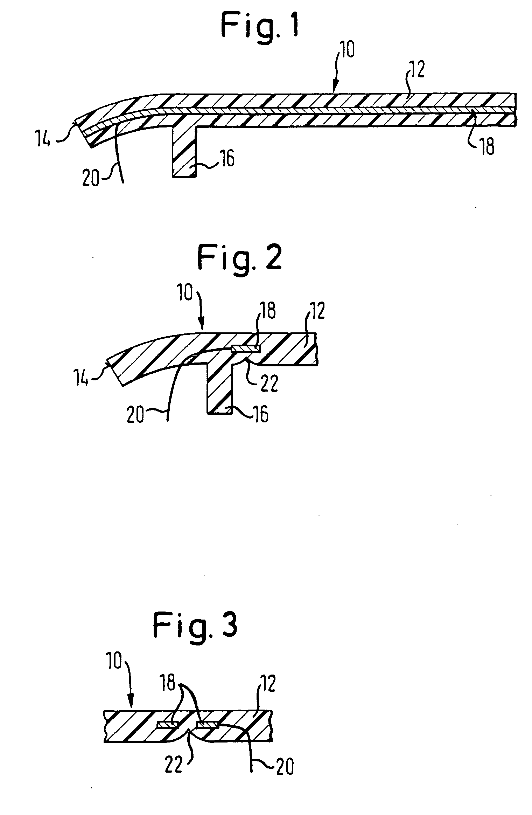

In Fig. 1 ist ein erstes Beispiel einer Abdeckkappe 10 für ein Gassackmodul einer Fahrzeuginsassen-Rückhaltevorrichtung gezeigt, wobei nur ein Teil der Abdeckkappe dargestellt ist. Die Abdeckkappe 10 weist bevorzugt eine Kunststoffschicht 12 auf, die zum Beispiel an ihren Rändern 14 abgewinkelt sein kann, um sich besser in die Optik des Lenkrades oder des Armaturenbrettes einzufügen. Die Abdeckkappe kann aber auch aus zwei oder mehr Schichten bestehen. Außerdem sind Befestigungselemente 16 vorgesehen, die Teil der Kunststoffschicht 12 sein können, mit denen die Abdeckkappe 10 am Fahrzeug befestigt werden kann. Im Inneren der Abdeckkappe 10 verläuft ein Heizmittel 18, das vom Kunststoffmaterial der Abdeckkappe 10 umgeben ist. Das Heizmittel 18 ist vorzugsweise eine elektrische Heizung, wobei die elektrische Versorgung über eine Anschluß 20 erfolgt. Das Heizmittel 18 kann sich, wie in Fig. 1 angedeutet, durch die gesamte Abdeckkappe 10 oder über wesentliche Teile derselben erstrecken. Hier besteht die Abdeckkappe aus mehreren übereinanderliegenden Schichten, und das Heizmittel befindet sich in einer dieser Schichten oder auch zwischen zweien dieser Schichten.

Bei diesem Beispiel wird bei niedrigen Umgebungstemperaturen die gesamte Abdeckkappe 10 geheizt und auf einer vorbestimmten Temperatur gehalten, die zum Beispiel bei etwa 20°C liegen kann.

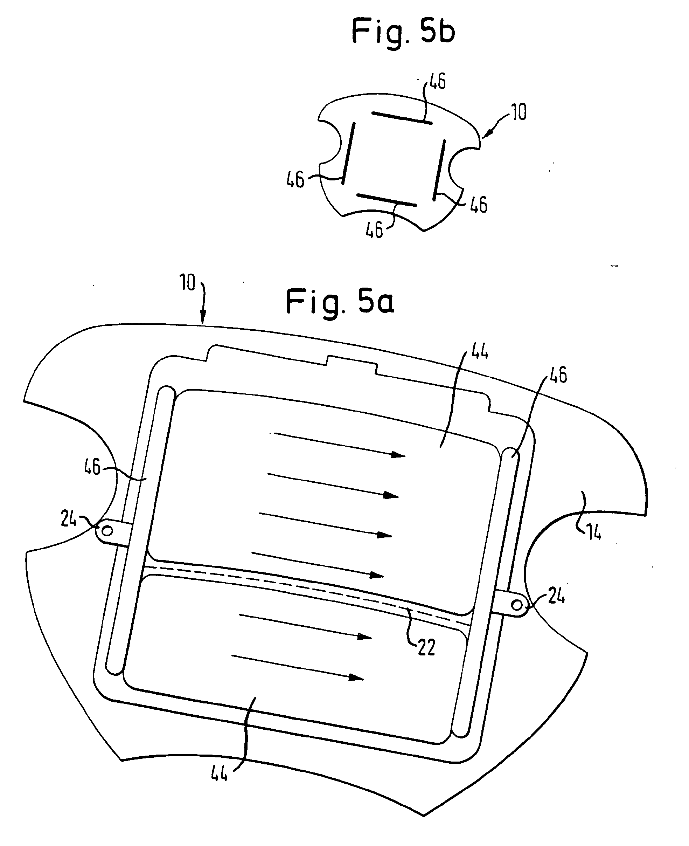

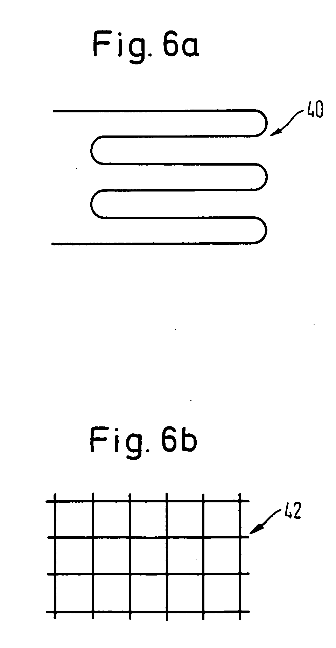

Das Heizmittel 18 kann zum Beispiel aus einem flächig verlegten Heizdraht 40 (Fig. 6a) bestehen, aus einer Heizmatte 42 (Fign. 6b, 7 und 8), also einer flächigen Anordnung eines oder mehrerer Heizdrähte, oder aus einer elektrisch leitfähigen Schicht 44 (Fign. 1, 5a), zum Beispiel einer Schicht aus einem bekannten elektrisch leitfähigen thermoplastischen Kunststoff.

In den beiden ersten genannten Fällen kann das Heizmittel 18 während des Herstellungsprozesses der Abdeckkappe 10 auf eine erste ausgebildete Kunststoffschicht der Abdeckkappe 10 aufgebracht und dann mit der oder den restlichen Schichten der Abdeckkappe 10 vergossen oder der Heizdraht kann umspritzt werden. Im Fall der Verwendung einer elektrisch leitfähigen Kunststoffschicht kann das Material ohne Unterbrechung des Spritzgußprozesses in einem weiteren Gußschritt eingefügt werden.

Durch das Heizmittel 18 kann der Kunststoff der Abdeckkappe 10 erwärmt und so einem Verspröden des Kunststoffes bei tiefen Temperaturen entgegengewirkt werden. Auf diese Weise wird auch die Kerbempfindlichkeit der Oberfläche der Abdeckkappe 10 reduziert. Das Verhalten der Abdeckkappe kann über einen weiten Bereich der Umgebungstemperatur nahezu konstant gehalten werden.

In der Abdeckkappe 10 können zusätzlich Schwächungszonen 22, also Zonen mit geringerer Kappendicke, vorgesehen sein, die das Öffnen der Abdeckkappe zur Freigabe des Gassacks erleichtern. Beispiele für die Anordnung von Schwächungszonen sind in den Fign. 2, 3, 5a und 7 dargestellt.

Fig. 2 zeigt ein weiteres Beispiel Hier ist die Abdeckkappe 10 mit Schwächungszonen 22 versehen, in denen die Abdeckkappe 10 bei Aufbringen einer vorbestimmten Kraft aufreißt, um einen Gassack freizugeben. Die Schwächungszonen sind hier als Einkerbungen dargestellt, können aber auch auf andere Art gebildet sein, z.B. durch Einschnitte ohne Materialabtrag oder durch eine großflächige Verringerung der Dicke der Abdeckkappe. Die Schwächungszonen 22 können z.B. am Rand der Abdeckkappe in der Nähe der Befestigung der Abdeckkappe am Fahrzeug angeordnet sein, wie es in Fig. 2 dargestellt ist.

In diesem Beispiel ist das Heizmittel 18 nur im Bereich der Schwächungszone 22 angeordnet. Als Heizmittel 18 wird vorzugsweise ein Heizdraht oder eine elektrisch leitfähige Schicht eingesetzt. Eine elektrisch leitfähige Schicht kann, abhängig vom verwendeten Material, auch zur Schwächung beitragen, wobei es dann von Vorteil ist, wenn die elektrisch leitfähige Schicht direkt über der mechanischen Schwächungszone angeordnet ist, wie es in Fig. 2 gezeigt ist.

In Fig. 3 ist ein weiteres Beispieldargestellt, bei dem die Schwächungszone 22 in der Mitte der Abdeckkappe 10 angeordnet ist, um ein mittiges Öffnen der Abdeckkappe bei der Entfaltung des Gassackes zu ermöglichen. In diesem Fall sind zwei Heizmittel 18 rechts und links der Schwächungszone 22 angeordnet, zum Beispiel zwei Heizdrähte, zwei Heizmatten oder auch zwei elektrisch leitfähige Schichten. Auf diese Weise wird das Öffnungsverhalten der Abdeckkappe nicht durch die Materialeigenschaften des verwendeten Heizmittels beeinflußt.

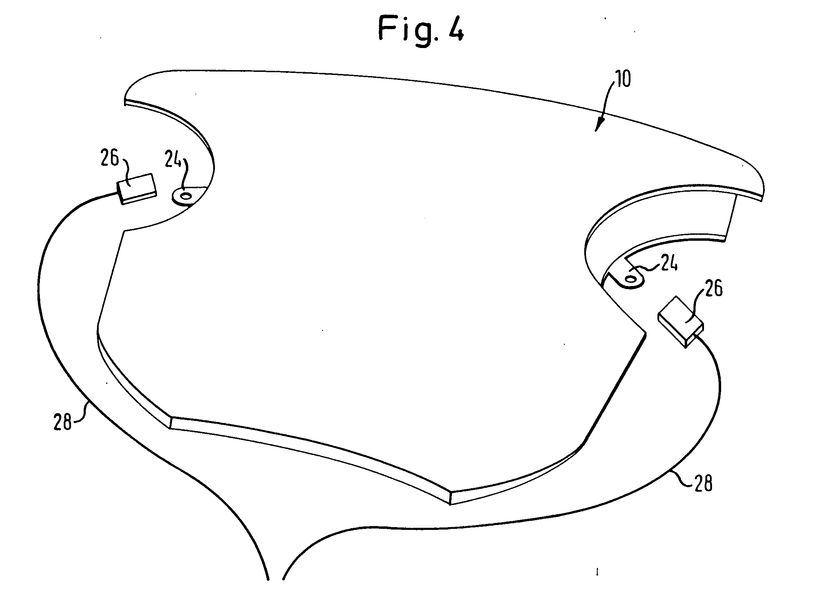

Figur 4 zeigt eine Möglichkeit der Realisierung der elektrischen Verbindung des Heizmittels 18 mit einer (nicht gezeigten) Stromversorgung. Die Anschlüsse 20 bestehen in diesem Fall aus in die Abdeckkappe 10 eingearbeiteten Flachstekkern 24, auf die Hülsen 26 aufgesteckt werden, die wiederum über Kabel 28 mit einer Stromversorgung verbunden sind.

In dem in Figur 5a gezeigten Beispiel ist eine elektrisch leitfähige Kunststoffschicht 44 in die Innenseite der Abdeckkappe 10 eingegossen. Zur elektrischen Kontaktierung sind langgestreckte Kontaktstreifen 46 aus Metall vorgesehen, die vorzugsweise einstückig mit Flachsteckern 24 verbunden sind. Die Verbindung mit einer Stromquelle erfolgt wie im Zusammenhang mit Figur 4 beschrieben. Die Länge der Kontaktstreifen 46 entspricht in etwa der Ausdehnung der elektrisch leitfähigen Schicht 44, um einen gleichmäßigen Stromfluß durch die Schicht 44 zu gewährleisten. Der Stromfluß ist in Figur 5a durch Pfeile verdeutlicht.

Die Kontaktstreifen 46 können auch an den abgewinkelten Rändern 14 angeordnet sein, solange sie sich in elektrischem Kontakt mit der Schicht 44 befinden.

Die Kontaktstreifen 46 sind vorzugsweise so gestaltet, daß sie während des Spritzgußprozesses in die Spritzgußform eingelegt und durch Umspritzen mit der Abdeckkappe 10 verbunden werden können. Alternativ kann die Abdeckkappe so geformt sein, daß sie z.B. eine Ausnehmung aufweist, in die die Kontaktstreifen formschlüssig eingelegt oder eingeklebt werden können.

Im Bereich der Schwächungszone 22 (in Fig. 5a mit einer gestrichelten Linie dargestellt) kann die Schicht 44 eine Unterbrechung aufweisen, durchgängig ausgebildet oder auch in ihrer Form der Schwächungszone angepaßt sein.

Figur 5b zeigt alternative Anordnungsmöglichkeiten für insgesamt vier Kontaktstreifen 46.

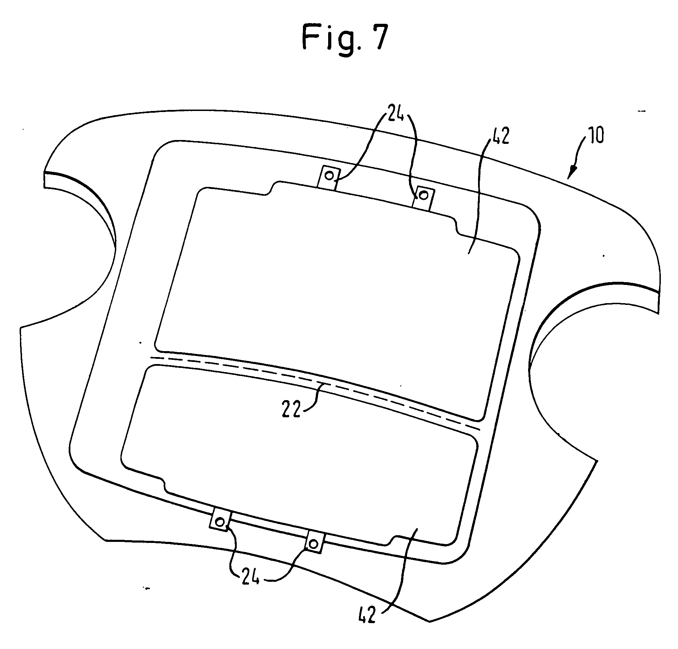

Figur 7 zeigt eine Abdeckkappe 10 mit zwei auf der Innenseite der Abdeckkappe angeordneten Heizmatten 42. Die Heizmatten 42 lassen eine Schwächungszone 22 frei, um das Öffnen der Abdeckkappe nicht zu beeinträchtigen. Pro Heizmatte 42 sind zwei elektrische Anschlüsse über Flachstecker 24 vorgesehen, die wie beschrieben mit einer Stromquelle verbunden sind.

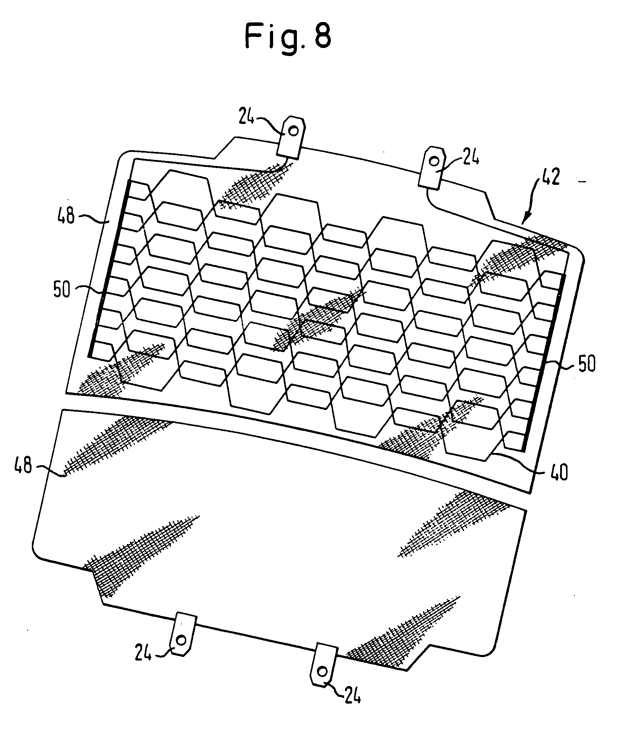

Der Aufbau der Heizmatten ist in Figur 8 genauer gezeigt. Die Heizmatten 42 bestehen aus einem Gewebe 48, auf das Heizdrähte 40 aufgebracht sind. Von der unteren Heizmatte ist nur das Gewebe 48 dargestellt, entsprechende Heizdrähte 40 sind zwar vorhanden, aber nicht gezeigt. Diese Heizdrähte 40 sind über Kontaktleisten 50 mit Flachsteckern 24 verbunden. Die Heizmatte 42 kann an der Kunststoffschicht 12 der Abdeckkappe 10 z.B. durch Ultraschallschweißen befestigt sein.

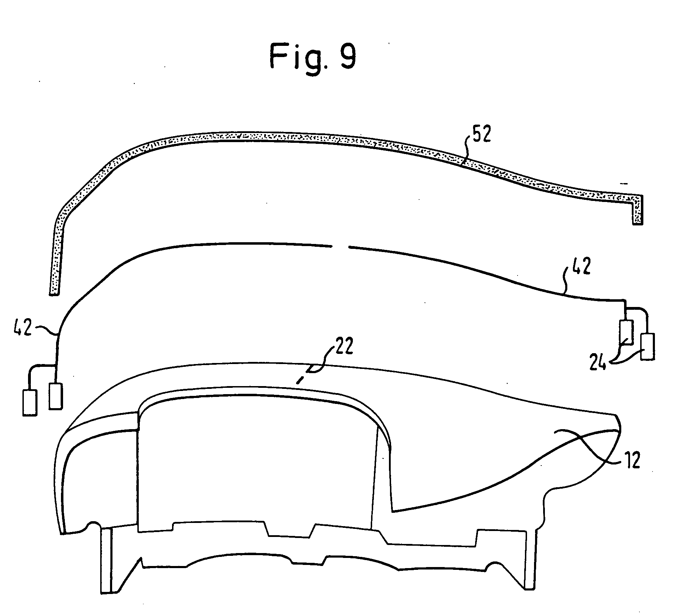

Die in Figur 9 gezeigte, erfindungsgemäße Ausführungsform wird bevorzugt, um eine belederte Abdeckkappe mit einem Heizmittel 18 zu versehen. Die den Körper der Abdeckkappe bildende Kunststoffschicht ist auf ihrer Außenseite mit zwei Heizmatten 42 verbunden, die eine Schwächungszone 22 freilassen. Ein Lederüberzug 52 wird über der Baugruppe aus Kunststoffschicht 12 und Heizmatten 42 aufgebracht.

Die Erfindung ist nicht auf die dargestellte Ausführungsform beschränkt, z.B. können Merkmale der dargestellten Beispiele im Ermessen des Fachmanns damit kombiniert werden.

Zusätzlich kann zur Temperaturregelung eine Elektronik mit einem im Bereich des Heizmittels angeordneten Temperaturfühler vorgesehen sein, die hier nicht dargestellt sind. Die Stromversorgung des Heizmittels 18 kann für die Verwendung der Abdeckkappe bei einem Fahrergassack an die Versorgung der anderen elektrischen Verbraucher im Lenkrad angeschlossen oder auch als eigenständige Elektrik realisiert sein.

## Patentansprüche

1. Gassackmodulabdeckkappe
einer Fahrzeuginsassen-Rückhaltevorrichtung,
mit wenigstens einer Kunststoffschicht,
und einem wenigstens stellenweise vorgesehenen Heizmittel (18), mit dem vor einer Aktivierung des Gassackmoduls die Temperatur der Abdeckkappe gegenüber der Umgebungstemperatur erhöht werden kann,
**dadurch gekennzeichnet, daß** ein Lederüberzug (52) vorgesehen ist und das Heizmittel (18) zwischen der Kunststoffschicht (12) der Abdeckkappe (10) und dem Lederüberzug (52) angeordnet ist.

2. Gassackmodulabdeckkappe nach Anspruch 1, **dadurch gekennzeichnet, daß** die Abdeckkappe (10) eine Schwächungszone (22) aufweist und daß das Heizmittel (18) im Bereich der Schwächungszone (22) angeordnet ist.

3. Gassackmodulabdeckkappe nach Anspruch 1 oder 2, **dadurch gekennzeichnet, daß** das Heizmittel eine elektrische Heizung ist.

4. Gassackmodulabdeckkappe nach Anspruch 3, **dadurch gekennzeichnet, daß** das Heizmittel (18) ein Heizdraht (40) ist.

5. Gassackmodulabdeckkappe nach Anspruch 3, **dadurch gekennzeichnet, daß** das Heizmittel (18) aus einem elektrisch leitfähigen Kunststoff besteht.

6. Gassackmodulabdeckkappe nach einem der vorhergehenden Ansprüche, **dadurch gekennzeichnet, daß** elektrische Verbindungselemente (20) zum Anschluß einer Stromquelle an das Heizmittel (18) vorgesehen sind, die in einer Kunststoffschicht der Abdeckkappe (10) eingegossen sind.

7. Gassackmodulabdeckkappe nach Anspruch 3, **dadurch gekennzeichnet, daß** das Heizmittel eine Heizmatte (42) ist.

8. Gassackmodulabdeckkappe nach Anspruch 7, **dadurch gekennzeichnet, daß** die Heizmatte (42) mit einer Kunststoffschicht (12) der Abdeckkappe (10) ultraschallverschweißt ist.

9. Gassackmodulabdeckkappe nach einem der vorhergehenden Ansprüche, **dadurch gekennzeichnet, daß** das Heizmittel unmittelbar unterhalb des Lederüberzugs (52) angeordnet ist.
